# EUROPEAN PATENT APPLICATION

(11) **EP 2 425 785 A1**
(43) Date of publication of application: **07.03.2012**
(21) Application number: 09841489.9
(22) Date of filing: 13.03.2009
(51) Int. Cl.: A61B 10/00, G01N 21/65

(54) **BODY TISSUE IMAGING USING RAMAN SCATTERING LIGHT**

(71) Applicant: Kyoto Prefectural Public University Corporation, Kyoto 602-8566 (JP)
(72) Inventor: TAKAMATSU, Tetsuro, Kyoto-shi Kyoto 602-0841 (JP); OGAWA, Mitsugu, Kyoto-shi Kyoto 602-0841 (JP); HARADA, Yoshinori, Kyoto-shi Kyoto 602-0841 (JP)
(74) Representative: HOFFMANN EITLE
(86) International application number: PCT/JP2009/054930
(87) International publication number: WO 2010/103661

(57) **Abstract**

An object of the present invention is to provide a method for the noninvasive imaging of a tissue (in particular, a cardiac tissue) in real time, and a device therefor. The present invention provides a method for imaging a sample that contains myocardial tissue and one or more blood vessels and/or one or more collagen-rich regions, the method comprising the steps of: (1) irradiating the sample that contains myocardial tissue and one or more blood vessels and/or one or more collagen-rich regions with an excitation light; (2) detecting Raman scattering light from the sample; and (3) analyzing the thus obtained Raman scattering light by using Raman scattering spectra that are characteristic of myocardial cells and red blood cells and/or collagen as indexes and thus imaging the sample.

## Description

### Technical Field

The present invention relates to a method for imaging biological tissue using Raman scattering spectra from the tissue. The present invention further relates to a device for imaging biological tissue using Raman scattering spectra.

### Background Art

Tissue imaging is indispensable for clarifying the distribution of various cells and other components that constitute the tissue. Myocardial biopsy is known as a conventional means for evaluating myocardial histology. However, myocardial biopsy requires immobilization and staining of specimens, which makes real-time analysis and imaging impossible. Further, myocardial biopsy poses the problem of damaging cardiac tissue. Magnetic resonance imaging (MRI) is a method used for obtaining information on cardiac functions and structure. However, the obtained information is not based on histological changes.
For example, the MRI method cannot clearly distinguish a normal myocardial cell region from a fibrotic tissue region where normal myocardial cells have been ischemically necrosed and transformed into fibrotic tissue.

In contrast, Raman scattering spectroscopy is a form of vibrational spectroscopy. This method provides direct information on chemical bonds in molecules. Raman scattering spectroscopy plots, as a spectrum, specific energy changes of vibration induced by incident light, thus allowing identification of a substance without staining. Imaging methods and devices that utilize such characteristics of Raman scattering spectroscopy have been developed (Patent Literature (PTL) 1 and 2). Recent research using Raman scattering spectroscopy in the medical field has focused on tissue diagnosis, such as the diagnosis of cancer (Non-patent Literature (NPL) 1), atherosclerosis (Non-patent Literature (NPL) 2), and oxygen saturation of hemoglobin (Non-patent Literature (NPL) 3). However, such research is nothing more than the analysis of Raman spectra of the target tissue, and is not intended to image the tissue so as to visually distinguish a lesion. As described above, although research is progressing on imaging using Raman scattering spectroscopy, there have been no reports on its application to imaging that makes various cellular components constituting a visceral organ tissue analyzable.

### Citation List

### Patent Literature

PTL 1: Japanese Unexamined Patent Publication No. 2000-55809
PTL 2: Japanese Unexamined Patent Publication No. 2007-147350

### Non-patent Literature

NPL 1: Haka, A.S. et al. (2006), Cancer Res. Vol. 66, 3317-22.
NPL 2: Motz, J.T. et al. (2006), J. Biomed. Opt. vol. 11, 021003.
NPL 3: Torres Filho, I.P., et al., (2008), J. Appl. Physiol. 104, 1809-17.

### Summary of Invention

### Technical Problem

In view of the current situation, an object of the present invention is to provide a method for the noninvasive imaging of a tissue (in particular, a cardiac tissue) in real time, and a device therefor.

### Solution to Problem

The present inventors carried out extensive research, and found the following:
(1) Raman scattering spectroscopy can distinguish myocardial cells from blood cells in the heart, based on their specific spectral patterns, and can image a sample containing a myocardial cell region and one or more blood vessels in such a manner that these tissues are clearly distinguishable from each other;
(2) Raman scattering spectroscopy can distinguish oxygenated red blood cells from deoxygenated red blood cells, based on their respective specific Raman spectra, and can image these red blood cells in such a manner that they are clearly distinguishable from each other; and
(3) Raman scattering spectroscopy can analyze Raman scattering light obtained from the tissue of a post-infarct heart, thus enabling imaging in such a manner that a fibrotic tissue region where myocardial cells have been necrosed and transformed into fibrotic tissue is clearly distinguishable from a normal myocardial region. The present inventors carried out further research based on these findings, and achieved clear, noninvasive, real-time imaging in such a manner that a normal myocardial cell region, one or more collagen-rich regions, and one or more blood vessels are visually distinguishable from each other, thereby accomplishing the present invention. More specifically, the present invention provides the following embodiments.

Item 1. A method for imaging a sample containing myocardial tissue and one or more blood vessels and/or one or more collagen-rich regions, the method comprising the steps of:
(1) irradiating the sample containing myocardial tissue and one or more blood vessels and/or one or more collagen-rich regions with an excitation light;
(2) detecting Raman scattering light from the sample; and
(3) analyzing the thus detected Raman scattering light by using Raman scattering spectra that are characteristic of myocardial cells and red blood cells and/or collagen as indexes and thus imaging the same.

Item 2. A method for imaging a sample containing myocardial tissue and one or more blood vessels and/or one or more collagen-rich regions, the method comprising analyzing Raman scattering light detected from the sample containing myocardial tissue and one or more blood vessels and/or one or more collagen-rich regions by a Raman scattering light detection means, by using Raman scattering spectra that are characteristic of myocardial cells and red blood cells and/or collagen as indexes, and thus imaging the same.

Item 3. The method according to Item 1 or 2 wherein the sample is a post-ischaemic heart or a part thereof.

Item 4. The method according to any one of Items 1 to 3 wherein the Raman scattering spectrum that is characteristic of myocardial cells is attributable to cytochrome.

Item 5. The method according to any one of Items 1 to 3 wherein the Raman scattering spectrum that is characteristic of red blood cells is attributable to hemoglobin.

Item 6. The method according to Item 4 wherein the Raman scattering spectrum attributable to hemoglobin is attributable to oxygenated hemoglobin and/or deoxygenated hemoglobin.

Item 7. The method according to Item 1 wherein the excitation light has a wavelength of 532 nm.

Item 8. An imaging device for imaging a sample containing myocardial tissue and one or more blood vessels and/or one or more collagen-rich regions, the device comprising:
(A) a means for irradiating the sample containing Myocardial tissue and one or more blood vessels and/or one or more collagen-rich regions with an excitation light;
(B) a means for detecting Raman scattering light from the sample; and
(C) a means for image-processing the thus detected Raman scattering light by using Roman scattering spectra that are characteristic of myocardial cells and red blood cells and/or collagen as indexes and thus imaging the same.

Item 9. A method for imaging a sample containing one or more blood vessels, the method comprising analyzing Raman scattering light obtained from the sample by using Raman spectra that are characteristic of oxygenated red blood cells and deoxygenated red blood cells as indexes and imaging the sample in such a manner that an artery and a vein are visually distinguishable from each other.

### Advantageous Effects of Invention

According to the present invention, cardiac tissue can be noninvasively imaged in real time in such a manner that a normal myocardial cell region, one or more collagen-rich regions, and one or more blood vessels are clearly distinguished from each other. Thus, according to the imaging method of the present invention, a normal myocardial cell region in a post-ischaemic heart can be appropriately distinguished from a fibrotic tissue region, where myocardial cells have been necrosed and transformed into fibrotic tissue. Further, according to the present invention, the presence of blood vessels in the heart can be clearly identified. Accordingly, the method of the present invention can investigate the presence of blood vessels in a post-infarct heart, and can be used for determining therapy and treatment regimens. Brief Description of Drawings

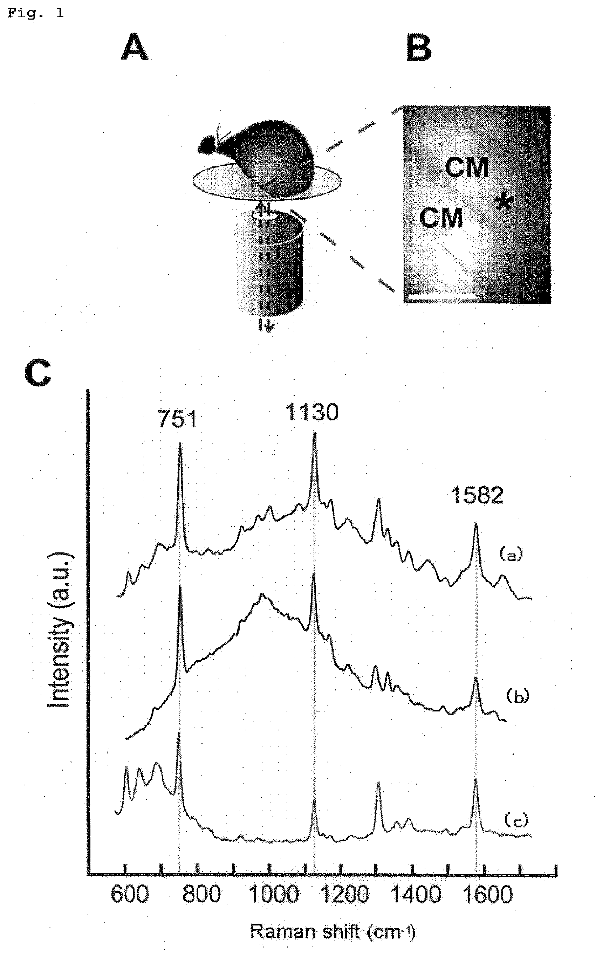

[Fig. 1] Figure 1 shows Raman spectra of the cytoplasm of representative fresh myocardial cells and heme proteins. Figure 1A is a schematic diagram of the excised whole heart, and optical setting. Figure 1B shows an autofluorescence image of a subepicardial region. Figure 1C shows Raman spectra of (a) myocardial cells (laser power: 20 mW, exposure time: 5 seconds), and (b) reduced cytochrome b5 (50 µM) and (c) reduced cytochrome c (125 µM) (laser power: 5 mW, exposure time: 10 seconds), obtained at the asterisk in Fig. 1B. In Fig. 1, CM stands for cardiomyocyte, and a.u. stands for arbitrary unit.

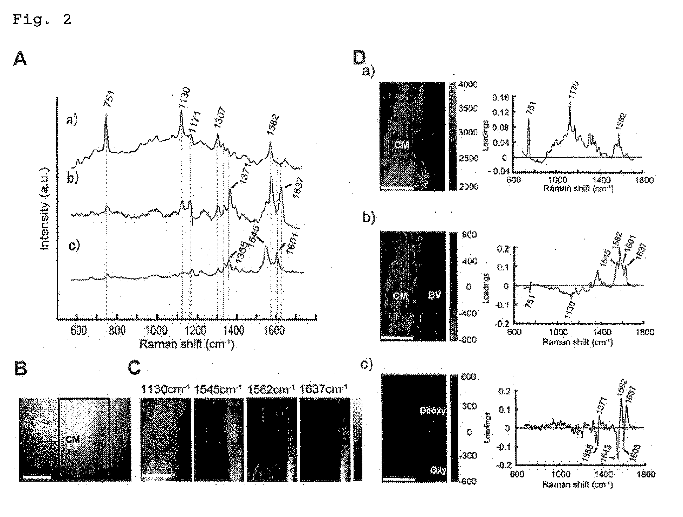

[Fig. 2] Figure 2 shows Raman images of myocardial cells and blood vessels in a fresh ex-vivo heart. Figure 2A shows Raman spectra of (a) myocardial cells, (b) oxygenated red blood cells, and (c) deoxygenated red blood cells. The Raman spectra of the red blood cells were obtained by exposure to laser beams with a laser power of 2 mW for 3 seconds. Figure 2B shows an autofluorescence image obtained from the cardiac surface of a representative sample. The boxed region shows where the Raman image was obtained. Figure 2C shows Raman band images. Figure 2D shows (a) first, (b) second, and (c) third principal component score images (left: 56 x 96 pixels) and their respective principal component spectra (right). The sample for imaging was irradiated with 56 lines of exposure at a laser power of 20 mW. The exposure time of each line was 5 seconds. The total exposure time was 280 seconds. The scale bars are 20 µm. CM stands for cardiomyocyte, BV stands for blood vessel, and a.u. stands for arbitrary unit.

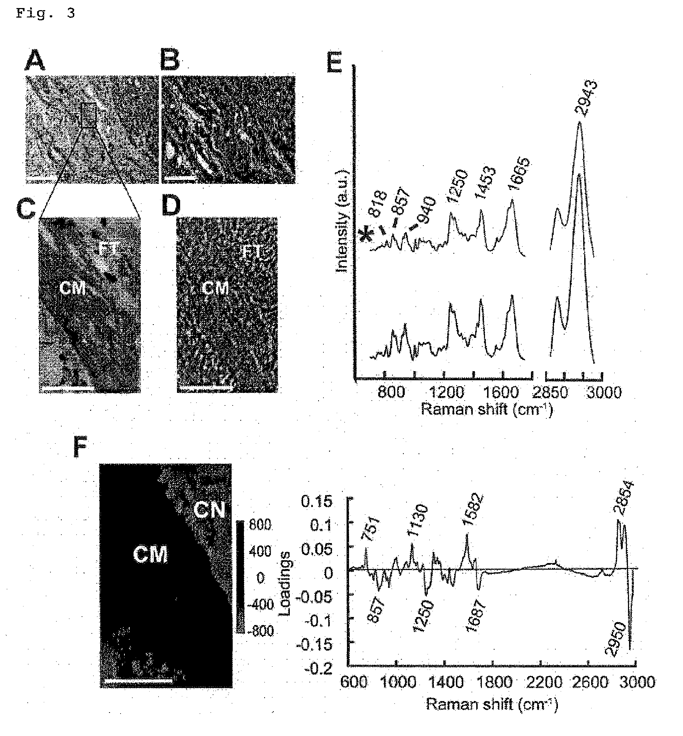

[Fig. 3] Figure 3 shows Raman images of myocardial cells and collagen in a representative frozen-thawed section of a myocardial infarct region. Figure 3A shows hematoxylin and eosin staining of the frozen-thawed section. Figure 3B shows Masson's trichrome staining of the border zone of myocardial infarction.
Figure 3C shows an image at a higher magnification of the boxed region in Fig. 3A. Figure 3D shows a white light image of the same region as Fig. 3C. Figure 3E shows Raman spectra of fibrotic tissue (upper) and collagen type I (lower) obtained at the asterisk of Fig. 3D. Figure 3F shows a second principal component score image (left) (108 x 179 pixels) and a second principal component spectrum (right). This image was obtained by irradiating the region shown in Fig. 3D with 108 lines of exposure at a laser power of 100 mW. The exposure time of each line was 5 seconds. The total exposure time was 540 seconds. The scale bars are 50 µm (in A and B) and 20 µm (in C, D, and F). CM stands for cardiomyocyte, FT stands for fibrotic tissue, CN stands for collagen, and a.u. stands for arbitrary unit.

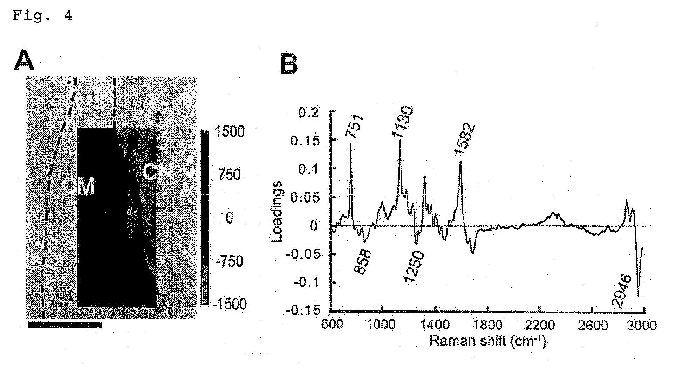

[Fig. 4] Figure 4 shows Raman images of myocardial cells and collagen in a freshly prepared myocardial infarct region. Figure 4A shows a blended photograph of a second principal component score image (60 x 150 pixels) with a corresponding white light image of the same representative sample. The dotted line shows the contour of the myocardial cells. Figure 4B shows a second principal component spectrum. The sample was irradiated with 60 lines of exposure at a laser power of 100 mW. The exposure time of each line was 5 seconds. The total exposure time was 300 seconds. CM stands for cardiomyocyte, and FT stands for fibrotic tissue. The scale bars are 20 µm.

### BEST MODE FOR CARRYING OUT THE INVENTION

The present invention is described below in more detail. However, it should be understood that the scope of the invention is not limited to the specific embodiments described below. Those skilled in the art can easily make various modifications of each element in the embodiments described below, without departing from the spirit of the present invention.

One embodiment of the present invention provides a method for imaging a sample containing myocardial tissue and one or more blood vessels and/or one or more collagen-rich regions. The method comprises the steps of:
(1) irradiating the sample containing myocardial tissue and one or more blood vessels and/or one or more collagen-rich regions with an excitation light;
(2) detecting Raman scattering light from the sample; and
(3) analyzing the thus detected Raman scattering light by using Raman scattering spectra that are characteristic of myocardial cells and red blood cells and/or collagen as indexes and thus imaging the same.

The imaging target in this embodiment is a sample containing myocardial tissue and one or more blood vessels and/or one or more collagen-rich regions. Preferably, the sample is the whole heart or a part thereof. The method of the present invention, which can differentiate a normal myocardial cell region from a myocardial cell necrosis region, is useful for diagnosing a post-ischaemic heart. From this viewpoint, the sample for imaging is the whole post-ischaemic heart or a part thereof. Specific examples thereof include hearts with ischemia-induced angina, myocardial infarction, heart failure, and arrhythmia. When the imaging target is a part of a heart, the part can be suitably selected by a person skilled in the art. For example, a site selected based on electrocardiogram or MRI results can be imaged.

The collagen-rich region refers to a region having a high collagen content compared to that of a normal myocardial cell region, which results from necrosis and transformation of myocardial cells into fibrotic tissue. There is no clear definition of the extent of fibrosis, but in the present invention, a region where at least 50% within the ventricular wall is transformed into fibrotic tissue is defined as one or more collagen-rich regions. Thus, the "collagen-rich region" refers to a cardiac region where myocardial cells have dropped off, thus losing the functions of myocardial cells. In contrast, the "normal region" refers to a cardiac region where normal myocardial cells are functioning. Further, the "blood vessel" refers to any blood vessel running within the myocardium, which includes arteries and veins. In particular, the imaging of small blood vessels present in the vicinity of myocardial cells is important to view the metabolism at the tissue cell level.

The sample may contain myocardial tissue and one or more blood vessels, or contain myocardial tissue and one or more collagen-rich regions. In one preferable embodiment, the sample contains myocardial tissue, one or more blood vessels, and one or more collagen-rich regions. In another embodiment, the sample may contain one or more blood vessels and one or more collagen-rich regions. The sample may also contain other cells and tissue, in addition to the myocardial tissue, collagen-rich region, and blood vessel. For example, the sample may contain an inflammatory cell, adipose tissue, etc.

The imaging method according to this embodiment comprises a step of irradiating the sample with an excitation light. The excitation light is a laser beam, irradiation of which generates Raman scattering light specific to materials contained in the sample. Any excitation light that is used in this technical field can be used. The excitation light can be suitably selected from the viewpoint of obtaining Raman spectra suitable for distinguishing myocardial cells from blood vessels and collagen. Accordingly, although the wavelength of the excitation light is not particularly limited, it is preferably a resonant wavelength of heme proteins of 400 to 600 nm, and more preferably 500 to 600 nm. The use of a 532-nm Nd:YAG laser is particularly preferable.

The means for irradiating a sample with excitation light is not particularly limited. Any means for emitting a laser beam that is usually used in Raman scattering spectroscopy can be used.

The imaging method according to this embodiment comprises a subsequent step of detecting Raman scattering light emitted from the sample. The means for detecting Raman scattering light is not particularly limited insofar as it can detect Raman scattering light and convert the light to a signal for image-processing. It can be suitably selected from detection means known in this technical field. For example, an area sensor comprising light receiving elements arranged in a matrix can be used as the detection means. More specifically, a two-dimensional CCD comprising pixels arranged in an array can be preferably used as the means for detecting Raman scattering light.

In a preferable embodiment, Raman scattering light from the sample is passed through a dichroic filter or the like, prior to the detection, and is thereby split into excitation light and reflected light having the same wavelength. Further, the split Raman scattering light is further spatially dispersed by using a dispersion element comprising a diffraction grating or a prism, according to the wavelength of the light. The dispersed Raman scattering light is converted into a signal representing a Raman spectrum in a detection means as mentioned above, and is output to an analyzing means, such as a personal computer.

The imaging method according to this embodiment comprises analyzing spectral information obtained from the detected Raman scattering light by using Raman spectra that are characteristic of myocardial cells, red blood cells and/or collagen as indexes, which are stored in the memory of analyzing means such as personal computers, and imaging the target. The analysis and imaging can be performed by a personal computer or the like using software known in this technical field. For example, MATLAB (Mathworks) can be used for analysis and imaging.

The Raman spectrum that is characteristic of myocardial cells is a spectrum of Raman scattering light specific to myocardial cells, which is obtained by irradiating myocardial cells with excitation light. Similarly, the Raman spectrum that is characteristic of red blood cells is a spectrum of Raman scattering light specific to red blood cells, which is obtained by irradiating red blood cells with excitation light. The Raman spectrum that is characteristic of collagen is a spectrum of Raman scattering light specific to collagen, which is obtained by irradiating collagen with excitation light. The red blood cell may be either an oxygenated red blood cell or a deoxygenated red blood cell. To distinguish whether a blood vessel contained in the sample is an artery or a vein, Raman spectra that are characteristic of oxygenated red blood cells and deoxygenated red blood cells can be used as indexes.

"Analyzing ... by using a Raman spectrum that is characteristic of myocardial cells" means that whether a site in a sample is composed of myocardial cells or not is determined by whether or not the Raman scattering light emitted from the site of the sample produces a Raman spectrum that matches the Raman spectrum characteristic of myocardial cells. Similarly, whether a specific site in the sample is composed of a blood vessel or not is determined by whether or not the Raman scattering light emitted from the sample produces a Raman spectrum characteristic of red blood cells. The collagen-rich region is also determined by whether or not the site emits Raman scattering light that produces a Raman spectrum characteristic of collagen.

An example of a Raman spectrum that is characteristic of myocardial cells is shown in Example 1 (Fig. 1). As shown in Fig. 1, when myocardial cells are excited with a 532-nm laser beam, peaks at Raman shifts of 751/cm, 1130/cm, and 1582/cm can be used as indexes. As shown in Example 1, the peak pattern of the Raman shifts is attributable to cytochrome in the myocardial cell. An example of Raman spectra that are characteristic of oxygenated red blood cells and deoxygenated red blood cells is shown in Example 2 (Fig. 2). As shown in Fig. 2, when oxidated red blood cells are excited with a 532-nm laser beam, peaks at Raman shifts of 1371/cm, 1582/cm, and 1637/cm can be used as indexes. Further, when reduced red blood cells are excited with a 532-nm laser beam, peaks at Raman shifts of 1355/cm, 1545/cm, and 1601/cam can be used as indexes. The peak pattern of the Raman shifts is attributable to the presence of hemoglobin in red blood cells. An example of a Raman spectrum that is characteristic of collagen is shown in Example 3 (Fig. 3). In the present invention, these spectra are used to carry out imaging in such a manner that normal myocardial tissue, one or more blood vessels, and one or more collagen-rich regions can be clearly distinguished from each other.

The distribution of Raman spectra obtained from the entire sample to be imaged is analyzed by using principal component analysis as an analysis means.

Principal component analysis is a multivariate analysis technique that creates synthesis variables (called principal components) from a plurality of observed variables as a way of concentrating all the observed spectral information. Accordingly, in Raman spectral analysis, principal component analysis can be used for the purpose of extracting spectral features that are unique to several components of the sample from a plurality of Raman spectra obtained from the imaging target. The principal component calculation principle includes the following steps:
(1) all the variables are normalized;
(2) the axis of each principal component is set so as to maximize the dispersion value of the principal component and thus minimize information loss, and eliminate the correlation among principal components;
(3) the principal components are classified as a "first principal component", a "second principal component", and a "third principal component" in descending order according to the degree of dispersion determined; and
(4) a weighting factor corresponding to the axis of each principal component is calculated by the least squares method. Individual Raman spectrum scores (principal component scores) relative to the thus obtained principal component spectra are calculated, and these values are plotted to image the target.

The above-explained series of steps, including irradiation of a sample with excitation light, detection of Raman scattering light from the sample, conversion of the detected Raman scattering light to a Raman spectrum signal, Raman spectral analysis, and imaging, can be carried out, for example, by the method described in Japanese Unexamined Patent Publication No. 2007-147357 and/or using a commercially available Raman spectroscopic imaging device (such as a Raman microscope produced by NanoPhoton Corporation).

One embodiment of the present invention provides a method for imaging a sample containing myocardial tissue and one or more blood vessels and/or one or more collagen-rich regions. This method comprises analyzing Raman scattering light detected from a sample containing myocardial tissue and one or more blood vessels and/or one or more collagen-rich regions by using Raman scattering spectra that are characteristic of myocardial cells and red blood cells and/or collagen by a Raman scattering light detection means, and imaging the sample. The method according to this embodiment comprises analyzing information obtained as Raman scattering light and visualizing, as an image, a sample that is the source of the light. The method according to this embodiment can be carried out according to the description of the above embodiment.

Another embodiment of the present invention provides an imaging device for imaging a sample containing myocardial tissue and one or more blood vessels and/or one or more collagen-rich regions. This device comprises: (A) a means for irradiating the sample with an excitation light; (B) a means for detecting Raman scattering light from the sample; and (C) image-processing the thus detected Raman scattering light by using Raman scattering spectra that are characteristic of myocardial cells and red blood cells and/or collagen as indexes and thus imaging the same. The (A) excitation light irradiation means, (B) Raman scattering light detection means, and (C) image-processing means in the imaging device of the present invention may be means known to be used in imaging devices for Raman scattering spectroscopy in this technical field, or modifications thereof. From the viewpoint of irradiating a heart with a laser beam and detecting Raman scattering light from the heart during a surgical operation, both the (A) excitation light irradiation means and (B) Raman scattering light detection means preferably have an elongated arm, the end of which can emit a laser beam or detect Raman scattering light.

### Examples

The present invention is described below in more detail with reference to Examples. However, it should be understood that the scope of the invention is not limited to the specific Examples below.

### Test Example: Preparation of post -infarct heart model

The samples used in the Examples below were prepared in the following manner. Whole heart samples (n = 12) were excised from young female Wistar rats (weighing 250 to 300 g) under general anesthesia. After administration of potassium chloride (0.2 mEq) via the inferior vena cava to stop myocardial cell contraction, all blood vessels arising from the heart were ligated to fill the coronary vessels with blood. The heart was then excised and immersed in Tyrode's solution (4°C, pH 7.4) to minimize postresection metabolic decomposition. Oxygenated blood and deoxygenated blood were withdrawn from the left and right atria, respectively, of three rats.

Myocardial infarction was created in 33 rats by complete ligation of the left descending coronary artery. Twenty-eight days later, the hearts were carefully excised from 20 survivors. Twenty hearts were immediately snap-frozen in liquid nitrogen and stored at -80°C until examination, and eight hearts were freshly prepared. Frozen samples were sliced into 5-µm-thick sections with a cryostat (LEICA, Wetzler, Germany). Samples of Raman analysis were subsequently mounted on 0.17-mm-thick quartz glass plates (Matsunami, Osaka, Japan), and kept moist with 10 mM PBS (pH 7.4). The sliced samples were subjected to hematoxylin and eosin staining and Masson's trichrome staining to confirm the histology. Fresh hearts were transversely cut, and infarcted areas were confirmed macroscopically. They were cut into 1 to 2-mm-thick slices. All experiments on fresh samples were completed within 1 hour postexcision.

### Example 1: Raman spectra of cytoplasm of myocardial cells

Raman spectra of the cytoplasm of myocardial cells obtained from the subepicardial region of a freshly prepared intact ex-vivo heart were measured with a laser Raman confocal microscope (RAMAN-11, produced by Nanophoton Corporation, Osaka, Japan). The excised heart was placed on a quartz glass plate on the stage of the microscope, and autofluorescence images were used to identify myocardial cells. Autofluorescence was detected at the excitation wavelength of 330 to 380 nm and emission wavelength of >420 nm (Fig. 1A) to thereby identify myocardial cells. After focusing on myocardial cells, the filter was exchanged, and Raman spectra were obtained (Fig. 1C). The laser intensity was 20 mW, and the irradiation time was 5 seconds. The microscope that was used has the structure illustrated in Harada, Y. et al., 2008, Proc. SPIE, vol. 6853,685308. The Raman spectra of myocardial cells include several Raman bands, mainly at 600, 643, 690, 751. 1003, 1130, 1171, 1307, 1336, 1356, 1396, 1450, 1582, 1657, 2854, and 2932 cm⁻¹ (Fig. 1A). Of these, strong bands at 751 (v 15 mode), 1130 (v 22 mode), and 1582 (v 19 mode) cm⁻¹ are attributable to the specific vibrational modes originating from a porphyrin ring in the center of heme proteins. Among heme proteins, the peaks of reduced cytochromes b5 and c correspond well with those of myocardial cells. Cytochrome b5 and c are representative heme proteins and have a β band, an electrical absorption band, at a wavelength of 520 to 530 nm. Myoglobin is considered to hardly contribute to the spectra of myocardial cells under the conditions used in this Example. This is because photodissociation phenomena make it difficult to obtain the Raman spectrum of oxy-mynglobin, and deoxy-myoglobin has a different spectral pattern.

### Example 2: Raman tissue image of myocardial cells and blood vessels in a fresh ex-vivo heart

The Raman spectra of cytochromes are similar to those of hemoglobin in many respects. To exclude the possible interference of hemoglobin in the detection of cytochromes in myocardial cells, the two heme proteins in the cardiac tissue must be differentiated. Oxygenated and deoxygenated red blood cells were withdrawn from the left and right atria, respectively, and collected into heparin-containing syringes. A small amount of each type of red blood cell was dripped on a quartz glass plate. Autofluorescence images were used to confirm the shapes of these red blood cells, and Raman spectra were obtained. Figure 2A shows Raman spectra of myocardial cells and oxygenated and deoxygenated red blood cells. All the characteristic Raman bands correspond well with reported spectra obtained under physiological conditions using 532-nm excitation light. In particular, the bands correspond well with the ν4 mode (oxidation marker band, 1350 to 1380 cm⁻¹ range) and the ν19 and v10 modes (1500 to 1650 cm⁻¹ range). These Raman bands are attributable to hemoglobin in red blood cells. Figure 2B shows an autofluorescence image of myocardial cells in the subepicardiac area and a small blood vessel in its vicinity. Autofluorescence was detected at an excitation wavelength of 330 to 380 nm and at a wavelength of >420 nm. Figure 2C shows Raman band images at characteristic Raman bands obtained from the subepicardiac area shown in Fig. 2B. Although the myocardial cell, at 1130 cm⁻¹, and oxyhemoglobin, at 1582 (ν19) and 1637 (ν10) cm⁻¹, can be separately imaged, it is impossible to image deoxyhemoglobin alone due to an interference by the tail of the oxyhemoglobin band at 1582 cm⁻¹. Both oxyhemoblobin and deoxyhemoglobin can be imaged by using a band at 1545 cm⁻¹ as an index.

To identify meaningful spectral differences and utilize the identified many bands for chemical mapping, principal component analysis (PCA) was performed on 5264 (56 x 94 pixels) Raman spectra acquired from the same area. PCA was performed using MATLAB (Mathworks, Natick, MA) and Nanophoton software to identify meaningful underlying variables within each large image data set. The PC score corresponding to each principal component (PC) spectrum was calculated in individual Raman spectra in the image. Imaging was performed by separating positive and negative scores, giving spatial information, and plotting the PC scores using Image J processing software (National Institutes of Health). The first PC extracted the spectra of myocardial cells, and the first PC score image indicated the presence of myocardial cells. Further, as shown in the second PC score image and second PC spectrum, myocardial cells containing reduced b- and c-type cytochromes (751 and 1130 cm⁻¹), and neighboring small blood vessels filled with hemoglobin (1545, 1582, 1601, and 1637 cm⁻¹) were identified (Fig. 2Db). Interestingly, the third PC score image and third PC spectrum represented different states of hemoglobin: oxy- (1371, 1582, and 1637 cm⁻¹) and deoxy- (1355, 1545, and 1603 cm⁻¹) hemoglobin. That is, a Raman image of a small artery and a small vein in the vicinity of myocardial cells was successfully obtained (Fig. 2Dc).

### Example 3: Raman tissue image in a myocardial infarct region

Raman spectral analysis on frozen-thawed sections from a myocardial infarct region was performed together with conventional histological examinations (Figs. 3A to 3C). The histological examinations were performed by subjecting serial sections in the vicinity of sections for Raman spectral analysis to hematoxylin and eosin staining and Masson's trichrome staining. A myocardial infarct region, where myocardial cells were transformed into fibrotic tissue, was identified by these staining methods. Figure 3E shows a representative Raman spectrum obtained from fibrotic tissue (obtained at the asterisk of Fig. 3D). The Raman spectrum obtained from the fibrotic tissue matched well with that of collagen type I. PCA was performed on 19,332 (108 x 179 pixels) Raman spectra obtained from the area shown in Fig. 3D. Raman bands characteristic of myocardial cells and fibrotic tissue were obtained. The second PC score image (Fig. 3F) clearly showed myocardial cells and surrounding collagen, and corresponded well with the serial hematoxylin and eosin-stained image (Fig. 3C). Positive bands in the second PC spectrum are associated with the presence of reduced b- and c-type cytochromes (751, 1130, and 1582 cm⁻¹) and lipid (2854 cm⁻¹, CH₂, stretching mode), while negative bands are associated with the presence of collagen type I (857, 1250, 1687, and 2945 cm⁻¹).

Based on the results of the freeze-thawed samples, the present inventors applied this methodology to a freshly prepared heart sample. A heart excised from a rat with myocardial infarction was cut into round slices, and the infarct area was macroscopically identified. The heart, including the infarct area, was cut into 1- to 2-mm thick slices to prepare samples. Each sample was placed on a quartz glass plate on the stage of a microscope. After focusing on the sample while viewing its white light image, Raman imaging data were obtained. PCA was performed on the obtained 9.000 (60 x 150 pixels) Raman spectra. Raman imaging of myocardial cells and collagen molecules was accomplished by imaging PC scores of individual Raman spectra, relative to the second PC spectra (Fig. 4A and Fig. 4B). The second PC (loading plots) obtained from the freeze-thawed sample (Fig 3F) corresponded well with that of the fresh sample (Fig. 4B).

## Claims

1. A method for imaging a sample containing myocardial tissue and one or more blood vessels and/or one or more collagen-rich regions, the method comprising the steps of:
(1) irradiating the sample containing myocardial tissue and one or more blood vessels and/or one or more collagen-rich regions with an excitation light;
(2) detecting Raman scattering light from the sample; and
(3) analyzing the thus detected Raman scattering light by using Raman scattering spectra that are characteristic of myocardial cells and red blood cells and/or collagen as indexes and thus imaging the same.

2. A method for imaging a sample containing myocardial tissue and one or more blood vessels and/or one or more collagen-rich regions, the method comprising analyzing Raman scattering light detected from the sample containing myocardial tissue and one or more blood vessels and/or one or more collagen-rich regions by a Raman scattering light detection means, by using Raman scattering spectra that are characteristic of myocardial cells and red blood cells and/or collagen as indexes, and thus imaging the same.

3. The method according to claim 1 or 2 wherein the sample is a post-ischaemic heart or a part thereof.

4. The method according to any one of claims 1 to 3 wherein the Raman scattering spectrum that is characteristic of myocardial cells is attributable to cytochrome.

5. The method according to any one of claims 1 to 3 wherein the Raman scattering spectrum that is characteristic of red blood cells is attributable to hemoglobin.

6. The method according to claim 4 wherein the Raman scattering spectrum attributable to hemoglobin is attributable to oxygenated hemoglobin and/or deoxygenated hemoglobin.

7. The method according to claim 1 wherein the excitation light has a wavelength of 532 nm.

8. An imaging device for imaging a sample containing myocardial tissue and one or more blood vessels and/or one or more collagen-rich regions, the device comprising:
(A) a means for irradiating the sample containing myocardial tissue and one or more blood vessels and/or one or more collagen-rich regions with an excitation light;
(B) a means for detecting Raman scattering light from the sample; and
(C) a means for image-processing the thus detected Raman scattering light by using Raman scattering spectra that are characteristic of myocardial cells and red blood cells and/or collagen as indexes and thus imaging the same.
